# EUROPEAN PATENT APPLICATION

(11) **EP 2 559 586 A2**
(43) Date of publication of application: **20.02.2013**
(21) Application number: 12004558.8
(22) Date of filing: 18.06.2012
(51) Int. Cl.: B60L 11/06, B60L 15/20

(54) **Systems and methods for engine load management for electric drive vehicles**

(30) Priority: 29.06.2011 US 201113171506
(71) Applicant: Caterpillar Inc., Peoria, IL 61626-9510 (US)
(72) Inventor: Thaduvayi, Srikar, Peoria, Illinois 61629-9510 (US); Houtz, Philip James, Peoria, Illinois 61629-9510 (US); Brand, Jeffrey Alan, Peoria, Illinois 61629-9510 (US); Crosman, Alexander Cameron, Peoria, Illinois 61629-9510 (US)
(74) Representative: Wagner & Geyer

(57) **Abstract**

A method for load management for an electric drive machine comprises receiving a fuel signal indicative of a volume of fuel provided to an engine (120) associated with the electric drive machine, receiving an engine speed signal indicative of a rotational speed of an output shaft of the engine (120), and receiving a boost pressure signal indicative of a pressure of air at an intake manifold of the engine (120). The method further includes determining a torque adjustment factor based on the fuel signal and the boost pressure signal, and determining a torque capability of the engine (120) based on the fuel signal and the engine speed signal. An engine torque limit is determined based on the torque capability and the torque adjustment factor. A first motor torque command signal is determined for a first electric drive motor (212a,212b) of the electric drive machine based at least in part on the engine torque limit.

## Description

### Technical Field

The present disclosure relates generally to engine load management and, more particularly, to systems and methods for engine load management for vehicles with electric drive systems.

### Background

Heavy mobile machines, such as on-and off-highway trucks, are commonly used in mining, construction, transportation, quarrying, logging, and other industries. Many heavy mobile machines employ mechanical drive systems that comprise an internal combustion engine mechanically coupled to wheels or other ground-engaging devices via a mechanical drive system. The mechanical drive transmission is designed to provide a wide range of torque output to the wheels, while allowing the engine to operate at a relatively narrow range of speeds, preferably speeds at which the engine is more efficient.

Although well suited for many applications, machines with mechanical drive propulsion systems can be problematic in certain situations. For example, in mining environments that require machines that can transport extremely heavy payloads, mechanically-driven machines require large engines that consume significant quantities of fuel. Furthermore, heavy payloads impose a significant amount of wear on the transmission and other mechanical drive components, increasing maintenance requirements and, ultimately, decreasing the life cycle of the drive system. Consequently, alternatives to conventional mechanical drive systems, particularly for mining and similar applications, are under constant development.

One such alternative involves using a conventional internal combustion engine to supply mechanical power to drive a generator. The generator produces electric power, which is used to drive one or more electric motors coupled to the wheels of the machine. Electronic controllers are used to vary the speed of the electric motors, thereby varying the torque output to the wheels. Because the internal combustion engine is used to drive a generator rather than the wheels of the machine, electric drive systems do not typically require an engine as large as that required by a mechanical drive system. In addition, because electric drive systems use variable-speed electric motors to drive the wheels rather than a complex mechanical transmission, electric drive vehicles typically provide superior downhill and/or retarding mode performance and continuously variable speed ratios when compared with mechanical drive systems.

Although electric drive systems require less maintenance and are more durable than their mechanical counterparts, they require more complicated control schemes when compared to mechanical drive systems. Specifically, because electric drive motors typically come up to speed faster than a conventional internal combustion engine, electronic controllers may be used to regulate torque requests to the motor to ensure that the engine has sufficient time to provide the necessary power output without overloading.

One control scheme for limiting the torque command to an electric motor is described in U.S. Patent Application Publication No. 2004/0049328 ("the '328 publication"). The '328 publication is directed to a system that purportedly reduces "motor shock" or "jerk" associated with abrupt acceleration of electric drive motors in hybrid electric vehicles. The '328 publication attempts to address this problem by determining an upper limit of motor torque and an upper limit of jerk based on vehicle speed. The '328 publication also discloses calculating a motor torque change rate based on the calculated limits of motor torque and jerk. According to the '328 publication, the motor torque can be limited so that it does not exceed the desired motor torque change rate.

Although the system described in the '328 publication may limit motor torque to enhance machine operation in certain situations, it may nonetheless be inadequate. Specifically, the '328 patent does not account for certain engine parameters, such as air/fuel ratio or boost pressure, in determining motor torque limits. This limits the ability of the system described in the '328 patent to control motor torque based on certain environmental factors, such as altitude.

The presently disclosed system and associated methods for engine load management are directed toward overcoming one or more of the problems set forth above and/or other problems in the art.

### Summary

In accordance with one aspect, the present disclosure is directed to a method for load management for an electric drive machine. The method may comprise receiving a fuel signal indicative of a volume of fuel provided to an engine associated with the electric drive machine, receiving an engine speed signal indicative of a rotational speed of an output shaft of the engine, and receiving a boost pressure signal indicative of a pressure of air at an intake manifold of the engine. The method may further include determining a torque adjustment factor based on the fuel signal and the boost pressure signal, and determining a torque capability of the engine based on the fuel signal and the engine speed signal. An engine torque limit may be determined based on the torque capability and the torque adjustment factor. A first motor torque command signal for a first electric drive motor of the electric drive machine may be determined based at least in part on the engine torque limit.

According to another aspect, the present disclosure is directed to an alternative method for load management for an electric drive machine. The method may include receiving a fuel signal indicative of a volume of fuel provided to an engine associated with the electric drive machine, receiving an engine speed signal indicative of a rotational speed of an output shaft of the engine, receiving a boost pressure signal indicative of a pressure of air at an intake manifold of the engine, and receiving a throttle position signal indicative of a position of a throttle for controlling the speed of the electric drive machine. A torque adjustment factor may be determined based on the fuel signal and the boost pressure signal. The method may also include determining a torque capability of the engine based on the fuel signal and the engine speed signal, and determining a requested motor torque based on the throttle position signal. An engine torque limit may be determined based on the torque capability and the torque adjustment factor. The method may further include determining a first motor torque command signal based on the engine torque limit and the requested motor torque.

In accordance with another aspect, the present disclosure is directed to a machine, comprising an internal combustion engine configured to generate a torque output, one or more traction devices, and an electric system. The electric system may comprise a generator coupled to the internal combustion engine via a shaft and configured to convert mechanical output power generated by the internal combustion engine into electric power. The electric system may also include at least one electric drive motor electrically coupled to the generator and configured to convert electric power generated by the generator to mechanical torque for driving the one or more traction devices associated with the machine. The electric system may further include a controller communicatively coupled to the internal combustion engine, the generator, and the at least one electric drive motor. The controller is configured to receive a fuel signal indicative of a volume of fuel provided to the internal combustion engine, receive an engine speed signal indicative of a rotational speed of the shaft, and receive a boost pressure signal indicative of a pressure of air at an intake manifold of the internal combustion engine. The controller may determine a torque adjustment factor based on the fuel signal and the boost pressure signal, determine a torque capability of the internal combustion engine based on the fuel signal and the engine speed signal, and determine an engine torque limit based on the torque capability and the torque adjustment factor. A first motor torque command signal for the at least one electric drive motor may be determined based at least in part on the engine torque limit.

### Brief Description of the Drawings

Fig. 1 illustrates an exemplary machine consistent with certain disclosed embodiments;
Fig. 2 provides a schematic diagram of an exemplary electric drivetrain propulsion system for a machine in accordance with the disclosed embodiments;
Fig. 3 provides a schematic of an exemplary controller for controlling the operation of the electric drive system;
Fig. 4 provides a functional block diagram illustrating the operation of the controller in accordance with certain disclosed embodiments; and
Fig. 5 provides a flowchart depicting an exemplary method for load management for an electric drive system, consistent with certain disclosed embodiments.

### Detailed Description

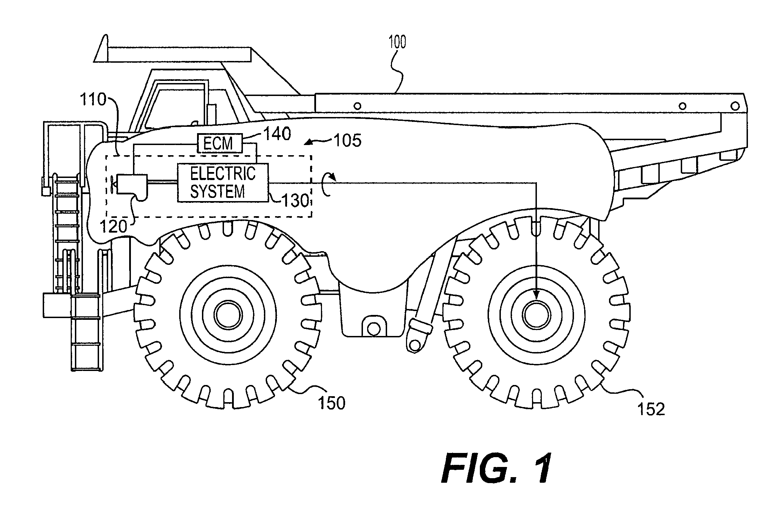

Fig. 1 illustrates an exemplary machine 100, in which systems and methods for engine load management may be implemented consistent with the disclosed embodiments. Machine 100 may be any machine having an electric drive propulsion system. According to the exemplary embodiment illustrated in Fig. 1, machine 100 may include an off-highway truck, such as that used in construction, mining, quarrying, or any other type of industry that requires heavy machinery.

Machine 100 may include a manually-operated machine, autonomous machine, or a machine that may be operated in both manual and autonomous mode.

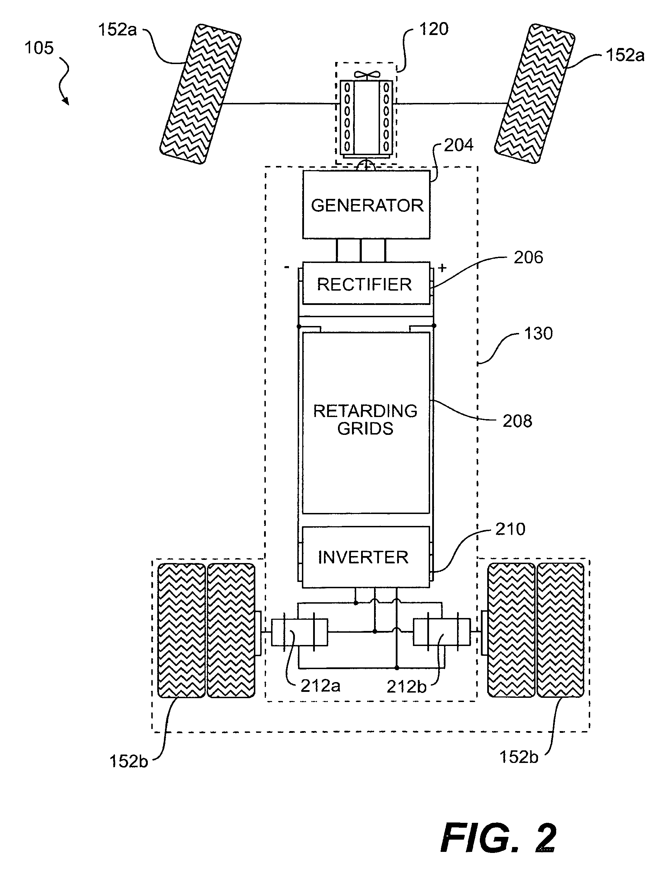

Machine 100 may be driven by an electric drive system 105. Electric drive system 105 may embody any type of system that uses electric power to generate a torque output for propelling and maneuvering machine 100. For example, electric drive system 105 may be a series electric drive system, a parallel electric drive system, a series or parallel hybrid electric drive system, or any other type of vehicle that uses electric power for propulsion. According to one exemplary embodiment, electric drive system 105 may include an electric drivetrain 110 comprising an internal combustion engine 120 and electric system 130, an electronic control module 140, and one or more traction devices, such as wheels 152a, 152b. Fig. 2 provides a schematic diagram of machine 100 and electric drive system 105.

As illustrated in Fig. 2, electric drive system 105 includes a plurality of mechanical and electrical components that cooperate to propel machine 100. For example, as explained above, electric drive system 105 may include an internal combustion engine 120 coupled via a shaft (not shown) to an electric system 130 that, in turn, may be coupled to one or more wheels 152a, 152b.

Internal combustion engine 120 may embody any type of engine that produces a mechanical torque output. For example, internal combustion engine 120 may be a conventional gasoline or diesel engine. Internal combustion engine 120 is configured to generate an output torque at an output shaft (not shown).

Electric system 130 may be mechanically coupled to internal combustion engine 120 and may include a plurality of components configured to convert the mechanical torque output from internal combustion engine 120 into electric power for propelling machine 100. According to the exemplary embodiment illustrated in Fig. 2, electric system 130 may include a generator 204, a rectifier 206, one or more retarding or resistive grids 208, an inverter 210, and one or more electric drive motors 212a, 212b. It is contemplated that electric system 130 may include additional and/or different components than those illustrated in Fig. 2. For example, electric system 130 may include a high-speed blower (not shown) configured to direct airflow to the one or more retarding grids 208 to dissipate excess heat generated by retarding grids 208 when electric system 130 is in a retarding mode.

Generator 204 may embody an electric power generator suitable for converting mechanical torque into electric power. More particularly, a rotor (not shown) of generator 204 may be coupled to an output shaft of internal combustion engine 120. The output shaft of engine 120 may rotate the rotor relative to a stator (not shown) of generator 204, thereby generating a current in the stator coils. According to one exemplary embodiment, generator 204 may be a three-phase AC generator.

Rectifier 206 may be electrically coupled to generator 204 and configured to convert the AC power produced by generator 204 into DC power. Any type of rectifier may be used. According to one embodiment, rectifier 206 may be a three-phase bridge full-wave rectifier (not shown) that includes a plurality of power diodes that are arranged in diode pairs around each phase of the output of the generator 204. Each diode pair includes two power diodes that may be connected in series to each other, with a connection to each phased output of the generator 204 between each pair. The three pairs of power diodes are connected in parallel to each other and produce DC power at the output.

Inverter 210 may be connected in parallel with rectifier 206 and configured to transform the DC power into variable frequency sinusoidal or non-sinusoidal AC power that drives electric drive motors 212a, 212b. Inverter 210 may embody any suitable type of inverter circuit. For example, inverter 210 may include three phase arrays of insulated gate bipolar transistors (IGBT) that are arranged in transistor pairs and that are configured to supply a 3-phase AC output to each electric drive motor 212a, 212b. Inverter 210 can control the speed of electric drive motors 212a, 212b by controlling the frequency and/or the pulse width of the AC power output.

Electric drive motors 212a, 212b may include any type of motor suitable to convert electric power to mechanical torque. According to the exemplary embodiment described above, drive motors 212a, 212b may be three-phase AC motors configured to receive three-phase AC power from inverter 210 and provide a torque output based on the frequency of the received AC power. According to one embodiment, a first drive motor 212a may be coupled to a first traction device (e.g., wheel 152b, left side) and a second drive motor 212b may be coupled to a second traction device (e.g., wheel 152b, right side).

One or more of wheels 152a, 152b may be mechanically coupled to one or more of electric drive motors 212a, 212b and configured to rotate in response to a corresponding rotation of an output shaft of the respective electric drive motor. For example, in the exemplary embodiment illustrated in Fig. 2, rear wheels 152b may be coupled to drive motors 212a, 212b. This coupling may be direct (e.g., via a shaft) or may be indirect (e.g., via a final drive system that operates to reduce the rate of rotation and increase the torque between electric drive motors 212a, 212b and rear wheels 152b).

Retarding grids 208 may be configured to dissipate heat generated by electric drive motors 212a, 212b when electric drive 105 is operating in a retarding mode. Retarding mode generally occurs when machine 100 is to be decelerated or its motion is otherwise to be retarded, for example, to prevent acceleration of the machine when travelling down an incline. Because electric motors behave like generators when kinetic energy is applied at the output shaft, when the machine is traveling down a steep incline, the force of gravity causes the wheels to drive the electric motor as a generator, thereby supplying power back into electric system 130. In order to effectively dissipate this power, the excess power is supplied to retarding grids 208, which includes a plurality of resistive elements that can convert excess electrical energy into heat. The heat may then be dissipated by one or more high-speed blowers to prevent thermal damage to electric system 130.

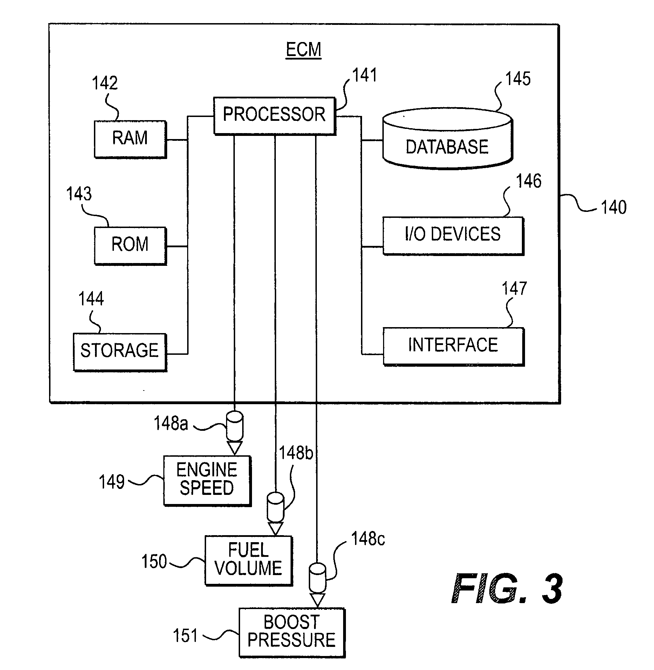

The components described above with respect to electric drive system 105 may be systematically controlled to balance the mechanical output generated by internal combustion engine 120 with the electrical power provided to drive motors 212a, 212b in order to effectively and efficiently operate machine 100. Control functions are provided by a controller, such as electronic control module (ECM) 140. Fig. 3 provides a schematic diagram of an exemplary ECM that may be used to control the operation of electric drive system 105.

ECM 140 may include any type of processor-based system on which processes and methods consistent with the disclosed embodiments may be implemented. For example, as illustrated in Fig. 3, ECM 140 may include one or more hardware and/or software components configured to execute software programs, such as software for estimating the position of the machine based on available machine position information. For example, ECM 140 may include one or more hardware components such as, for example, a central processing unit (CPU) (processor 141), a random access memory (RAM) module 142, a read-only memory (ROM) module 143, a storage device 144, a database 145, one or more input/output (I/O) devices 146, and a network interface 147. Alternatively and/or additionally, ECM 140 may include one or more software components such as, for example, a computer-readable medium including computer-executable instructions for performing methods consistent with the disclosed embodiments. It is contemplated that one or more of the hardware components listed above may be implemented using software. For example, storage device 144 may include a software partition associated with one or more other hardware components of ECM 140. ECM 140 may include additional, fewer, and/or different components than those listed above. It is understood that the components listed above are exemplary only and not intended to be limiting.

Processor 141 may include one or more processors, each configured to execute instructions and process data to perform one or more functions associated with ECM 140. As illustrated in Fig. 3, processor 141 may be communicatively coupled to RAM 142, ROM 143, storage device 144, database 145, I/O devices 146, and network interface 147. Processor 141 may be configured to execute sequences of computer program instructions to perform various processes, which will be described in detail below. The computer program instructions may be loaded into RAM for execution by processor 141.

RAM 142 and ROM 143 may each include one or more devices for storing information associated with an operation of ECM 140 and/or processor 141. For example, ROM 143 may include a memory device configured to access and store information associated with ECM 140, including information for identifying, initializing, and monitoring the operation of one or more components and subsystems of ECM 140. RAM 142 may include a memory device for storing data associated with one or more operations of processor 141. For example, ROM 143 may load instructions into RAM 142 for execution by processor 141.

Storage device 144 may include any type of mass storage device configured to store information that processor 141 may need to perform processes consistent with the disclosed embodiments. For example, storage device 144 may include one or more magnetic and/or optical disk devices, such as hard drives, CD-ROMs, DVD-ROMs, or any other type of mass media device.

Database 145 may include one or more software and/or hardware components that cooperate to store, organize, sort, filter, and/or arrange data used by ECM 140 and/or processor 141. For example, database 145 may include, for example, a plurality of look-up tables that may be used to control internal combustion engine 120 and/or electric drive motors 212a, 212b (e.g., motor torque tables, engine torque capability tables, steady state engine data, boost pressure tables, fuel tables, etc.). It is contemplated that database 145 may store additional and/or different information than that listed above.

I/O devices 146 may include one or more components configured to communicate information with a user associated with ECM 140. For example, I/O devices 146 may include a console with an integrated keyboard and mouse to allow a user to input parameters associated with ECM 140. I/O devices 146 may also include a display including a graphical user interface (GUI) for outputting information on a monitor. I/O devices 146 may also include peripheral devices such as, for example, a printer for printing information associated with ECM 140, a user-accessible disk drive (e.g., a USB port, a floppy, CD-ROM, or DVD-ROM drive, etc.) to allow a user to input data stored on a portable media device, a microphone, a speaker system, or any other suitable type of interface device.

Network interface 147 may include one or more components configured to transmit and receive data via a communication network, such as the Internet, a local area network, a workstation peer-to-peer network, a direct link network, a wireless network, or any other suitable communication platform. In this manner, ECM 140 may communicate with one or more external devices through the use of a network architecture (not shown). In such an embodiment, the network architecture may include, alone or in any suitable combination, a telephone-based network (such as a PBX or POTS), a local area network (LAN), a wide area network (WAN), a dedicated intranet, and/or the Internet. Further, the network architecture may include any suitable combination of wired and/or wireless components and systems. For example, network interface 147 may include one or more modulators, demodulators, multiplexers, demultiplexers, network communication devices, wireless devices, antennas, modems, and any other type of device configured to enable data communication via a communication network.

ECM 140 may be communicatively coupled to one or more sensors 148a-148c, each of which may be configured to measure at least one operational aspect associated with machine 100 and/or electric drive system 105. For example, ECM 140 may be communicatively coupled to a speed sensor 148a and configured to receive engine speed signals 149 indicative of a rotational speed of an output shaft of the engine. Alternatively or additionally, ECM 140 may be coupled to a fuel sensor 148b and configured to receive a fuel signal 150 indicative of a volume of fuel provided to an engine associated with the electric drive machine. ECM 140 may also be coupled to a boost pressure sensor 148c and configured to receive a boost pressure signal 151 indicative of a pressure of air at an intake manifold of the engine. It is contemplated that ECM 140 may be coupled to additional sensors than those listed above. For example, ECM 140 may be coupled to a throttle position sensor (not shown) and configured to receive signals indicative of a fuel request by machine 100 and/or a machine operator.

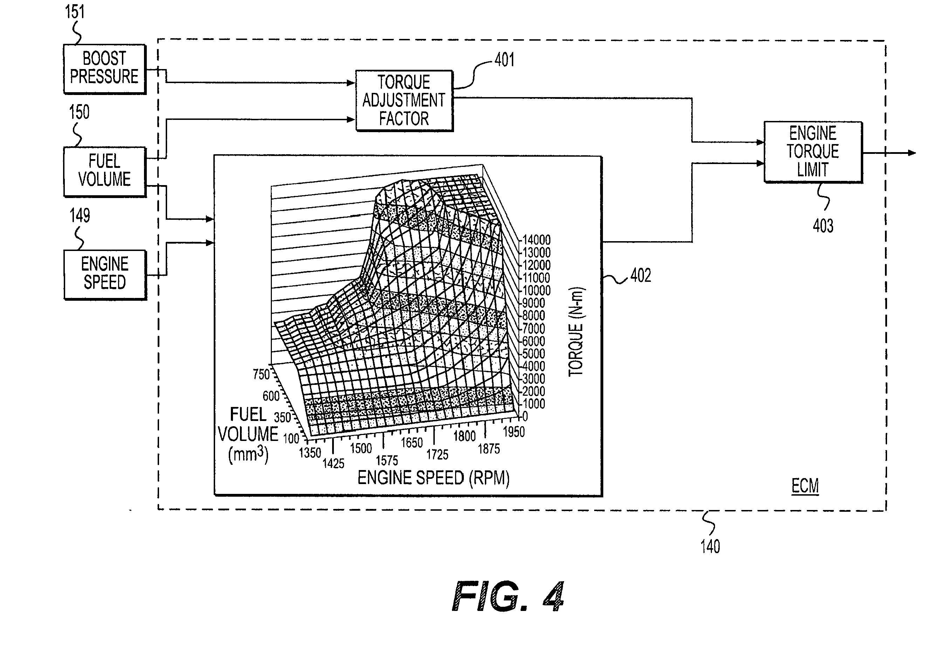

ECM 140 may be configured to receive a plurality of operational parameters associated with the engine and responsively generate control signals for operating electric drive system 105. For example, because the electric drive motors typically respond to torque commands faster than the engine, ECM 140 may regulate torque requests to electric drive motors 212a, 212b to ensure that engine 120 is able provide the necessary power output without overloading. In doing so, ECM 140 may be configured to balance the engine torque output with the motor drive torque commands in an effort to keep electric drive system 105 operating within a desired range. Fig. 4 illustrates a functional block diagram for determining an engine torque limit that may be implemented by ECM 140. This engine torque limit may be used to identify a corresponding torque limit for electric drive motors 212a, 212b.

As illustrated in Fig. 4, ECM 140 may include a plurality of modules, each configured to receive one or more input parameters and determine a corresponding output. According to one embodiment, ECM 140 may include a torque adjustment factor module 401, an engine torque capability module 402, and an engine torque limit module 403.

Torque adjustment factor module 401 may be configured to determine a factor by which to adjust an engine torque limit based on certain engine performance factors, such as altitude. For example, because barometric pressure at different altitudes affects an engine's internal combustion characteristics, the engine torque limit at higher altitudes may be lowered to account for decreased engine performance at these altitudes. The factor by which torque is adjusted may be determined by torque adjustment factor module 401.

According to one embodiment, torque adjustment factor module 401 may receive, among other things, data indicative of a current boost pressure and fuel volume associated with engine 120. Boost pressure may be indicative of the absolute pressure (relative to sea level) of the air at the intake manifold (or at the output of the turbo booster) of engine 120. Fuel volume may be indicative of the current (e.g., instantaneous) fuel consumption characteristic of engine 120. Torque adjustment factor module 401 may be configured to determine a current air/fuel mixture of the engine and determine a factor by which the engine torque limit is to be modified (if at all).

For example, torque adjustment factor module 401 may determine a current air/fuel ratio and, using a look-up table, determine an amount by which the current air/fuel ratio differs from an expected air/fuel ratio (e.g., at sea level). Torque adjustment factor module 401 may determine a percentage by which to adjust the engine torque capability, based on a difference between the current and expected air/fuel ratios. According to one embodiment, torque adjustment factor module 401 may include data indicative of the performance of the machine operating at various air/fuel levels and engine operating parameters. This performance data may be based, for example, on machine fields tests and/or computer simulations of software models of machine 100. Using this performance data, torque adjustment factor module 401 may be configured to estimate a percentage by which the performance of the machine differs between the current air/fuel ratio and an expected or "target" air/fuel ratio (determined, for example, at an altitude at or near sea level).

According to one embodiment, torque adjustment factor may be calculated as a ratio that is normalized to a value of "1." Thus, for example, if the current air/fuel mixture is the same as an expected air/fuel mixture (e.g., for a machine operating at or near sea level), the ratio between the current and expected air/fuel mixture is "1." If, on the other hand, the current air/fuel mixture is 75% of the expected air/fuel mixture, the ratio between the current and expected air/fuel mixture is "0.75." The torque adjustment factor corresponds to a factor by which the engine torque capability may be adjusted to compensate for the expected degradation in machine performance as a function of altitude.

Engine torque capability module 402 may be configured to determine the capability of the engine to generate torque at a given fuel volume and engine speed. Accordingly, engine torque capability module 402 may be configured to receive the current fuel signal 150 and engine speed signal 149 and determine, based on these parameters, a torque capability of the engine.

According to the embodiment illustrated in Fig. 4, the engine torque capability may establish the baseline output torque value by which the engine may be limited for a plurality of fuel volume and engine speed data points. As will be explained, this baseline may be modified by the torque adjustment factor to determine a final engine torque limit and, ultimately, a command signal for one or more electric drive motors 212a, 212b.

For example, as shown in the graph associated with engine torque capability module 402, a machine operating at a current fuel volume of 400 mm³ and engine speed of 1425 rpm has a maximum torque output capability of approximately 4500 N-m. As the engine speed and fuel volume increase, the maximum torque capability of the engine also increases in accordance with the torque profile curve illustrated by the graph of Fig. 4.

According to one embodiment, the engine torque capability may be predetermined, based on the steady state torque parameters associated with engine. Alternatively or additionally, the engine torque capability may be customized to meet the particular needs of the environment and/or engine operating objectives.

For example, certain project environments, such as mining, may require machines that are capable of hauling extremely heavy payloads. Under heavy payload conditions, machines may expend a significant amount of time and effort accelerating to a desired travel speed. In an effort to reduce the acceleration time, the maximum torque capability may be reduced at lower fuel volumes and engine speeds. This reduction in maximum torque capability allows the engine to accelerate more quickly, which, in turn, increases the amount of electric power supplied by generator 204 to electric drive motors 212a, 212b. Such an increase in electric power to electric drive motors 212a, 212b increases the ability of machine 100 to accelerate rapidly. The amount by which the steady state engine torque parameters is reduced - referred to herein as the acceleration margin - may be customized based on the desired acceleration capabilities of the machine.

According to one exemplary embodiment, the engine torque capability is determined by first determining the steady state torque specifications at a plurality of fuel volumes and engine speeds. The acceleration margin for each of the plurality of fuel volumes and engine speeds may then be determined based on a desired acceleration response of the machine. The engine torque capability may be determined by subtracting the acceleration margin for a particular fuel volume and engine speed from the corresponding steady state torque specification. This process may be repeated for the plurality of fuel volumes and engine speeds until an engine torque capability profile, similar to that illustrated by the graph of Fig. 4, is complete.

Engine torque capability module 402 is illustrated as a graph depicting the engine torque capability at a plurality fuel volumes and engine speeds. During operation of machine 100, engine torque capability module 402 may receive a current fuel volume and engine speed and, based on the information in the graph, determine the appropriate engine torque capability associated with the current fuel volume and engine speed. Although illustrated in Fig. 4 as a graph, torque capability data may be stored in a plurality of different formats such as, for example, a look-up table, a database, or any other suitable format for easily accessing the data. Furthermore, the values associated with the engine torque capability parameters depicted in the graph are exemplary only, and not intended to be limiting.

The outputs of engine torque capability module 402 and torque adjustment factor module 401 may be fed into engine torque limit module 403. Engine torque limit module 403 may adjust the engine torque capability based on the torque adjustment factor to generate an engine torque limit. According to one embodiment, the engine torque limit may be determined as the product between the engine torque capability and the torque adjustment factor (expressed as a ratio or percentage, with a maximum value of "1"). The engine torque limit may be applied to the engine to limit the output torque provided by the engine.

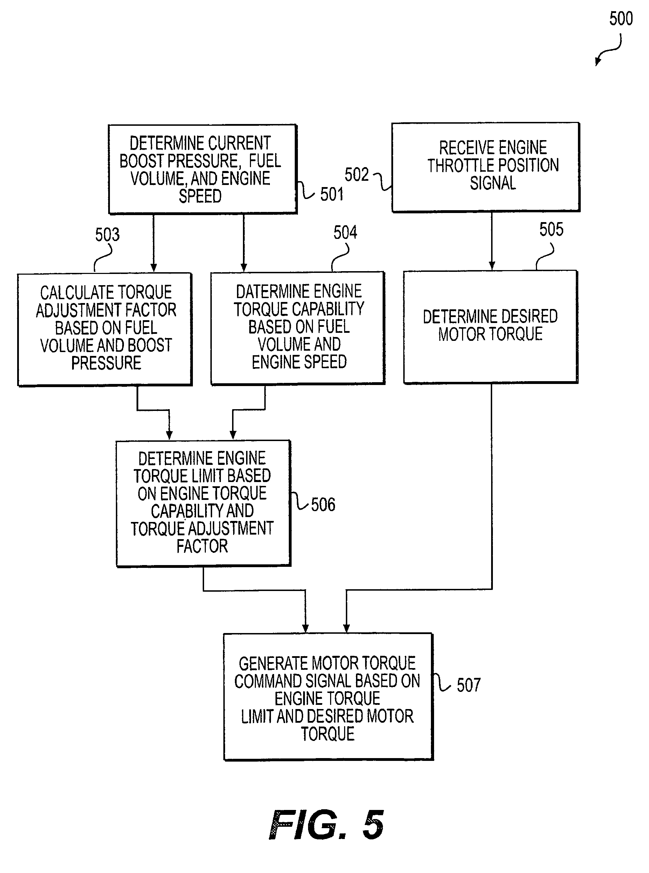

The methods and systems described herein are directed to balancing the mechanical capabilities of the engine and the torque commands provided to the electric drive motors 212a, 212b. It is also contemplated that processes and methods consistent with the disclosed embodiments ensure that the electric drive system 105 can provide torque output that is responsive to an operator's request without overloading engine 120. Fig. 5 provides a flowchart 500 illustrating an exemplary method load management for an electric drive system.

As illustrated in Fig. 5, the process commences by determining/receiving signals indicative of a current boost pressure, fuel volume, and engine speed (Step 501). As explained above, ECM 140 may be coupled to an engine speed sensor 148a, a fuel sensor 148b, and/or a boost pressure sensor 148c and configured to receive respective engine speed, fuel volume, and boost pressure signals. Based on these received signals, ECM 140 may determine an engine speed, fuel volume, and boost pressure.

ECM 140 may also be configured to receive an engine throttle position signal (Step 502) indicative of a position of a throttle for controlling the speed of machine 100. For example, ECM 140 may be coupled to a throttle position sensor that detects the relative position of the throttle. According to one embodiment, throttle position signal may generated in response to an operator request to increase or decrease the speed of machine 100. Alternatively or additionally, throttle position signal may be generated by machine 100 if, for example, the machine is operating in an autonomous mode.

ECM 140 may be configured to calculate a torque adjustment factor based on the fuel volume and boost pressure signals (Step 503). For example, a torque adjustment factor module 401 of ECM 140 may determine a current air/fuel mixture and, using a look-up table, determine an expected air/fuel ratio (e.g., at sea level). Torque adjustment factor module 401 may analyze engine performance at the current air/fuel ratio and the expected air/fuel ratio and estimate. The torque adjustment factor may be determined as a percentage by which the performance of the machine differs at the current air/fuel ratio compared with the expected air/fuel ratio. According to one embodiment, the torque adjustment factor may be calculated as a ratio that is normalized to 1.

ECM 140 may be configured to determine an engine torque capability based on the fuel volume and engine speed signals (Step 504). According to one embodiment, ECM 140 may retrieve, from a look-up table, an engine torque capability at the current fuel volume and engine speed. As explained above, this torque capability may be based, at least in part, on the steady state torque specifications of the machine and a desired acceleration margin associated with the current fuel volume and engine speed.

ECM 140 may also determine a desired motor torque based at least in part on a throttle position signal (Step 505). According to one exemplary embodiment, the desired motor torque is determined using predetermined drive motor curves (not shown) based on the throttle position signal, current motor speed, and electric power characteristics of one or more electric drive motors 212a, 212b.

Once the torque adjustment factor and engine torque capability data have been determined, ECM 140 may determine an engine torque limit (Step 506). As explained above, the engine torque limit may be determined by adjusting the engine torque capability by the ratio (or percentage) associated with the torque adjustment factor. According to one embodiment, the engine torque limit is calculated as the product of the engine torque capability value and the torque adjustment factor.

ECM 140 may generate a motor torque command signal based on the engine torque limit and the desired motor torque (Step 507). According to one embodiment, ECM 140 may calculate an engine-limited motor torque based on the engine torque limit and compare the requested motor torque with this engine-limited motor torque. If the requested motor torque is less than the engine-limited motor torque, ECM 140 generates a motor torque command signal that provides the requested motor torque to electric drive motors 212a, 212b. If, on the other hand, the requested motor torque is greater than the engine-limited motor torque, ECM 140 generates a motor torque command signal that provides the engine-limited motor torque to electric drive motors 212a, 212b.

### Industrial Applicability

The disclosed systems and methods for drivetrain load management described herein provide a robust solution for enhancing the performance of electric drive systems by including certain parameters, such as boost pressure, into the engine load balancing scheme. By compensating for boost pressure using the torque adjustment factor, the presently disclosed load management system allows for enhanced performance of the electric drive system in a multitude of environments.

The presently disclosed load management system may have several advantages. Specifically, by adjusting the target engine limits on boost pressure and, in some cases, desired acceleration characteristics, the engine may be adapted to operate in a wider range of altitudes, increasing the operational flexibility of the machines. Such flexibility is particularly advantageous in environments that have significant changes in elevation, where machine performance may otherwise degrade.

Furthermore, the presently disclosed load management system may reduce production costs. Specifically, by enhancing the ability of a single machine to operate in wide range of altitudes, the need for designing, manufacturing, and/or reconfiguring machines to operate in different altitudes may be significantly reduced.

It will be apparent to those skilled in the art that various modifications and variations can be made to the disclosed systems and associated methods for load management of an electric drive system. Other embodiments of the present disclosure will be apparent to those skilled in the art from consideration of the specification and practice of the present disclosure. It is intended that the specification and examples be considered as exemplary only, with a true scope of the present disclosure being indicated by the following claims and their equivalents.

## Claims

1. A method for load management for an electric drive machine, comprising:
receiving a fuel signal indicative of a volume of fuel provided to an engine associated with the electric drive machine (501);
receiving an engine speed signal indicative of a rotational speed of an output shaft of the engine (501);
receiving a boost pressure signal indicative of a pressure of air at an intake manifold of the engine (501);
determining a torque adjustment factor based on the fuel signal and the boost pressure signal (503);
determining a torque capability of the engine based on the fuel signal and the engine speed signal (504);
determining an engine torque limit based on the torque capability and the torque adjustment factor (506); and
determining a first motor torque command signal for a first electric drive motor of the electric drive machine based at least in part on the engine torque limit (507).

2. The method of claim 1, further including limiting output torque of the engine based on the engine torque limit.

3. The method of claim 1, further including determining a second motor torque command signal for a second electric drive motor of the electric drive machine based at least in part on the engine torque limit, wherein the first electric drive motor is associated with a first traction device and the second electric drive motor is associated with a second traction device.

4. The method of claim 1, wherein determining a motor torque command signal includes:
receiving a throttle position signal indicative of a position of a throttle for controlling speed of the electric drive machine;
determining a requested motor torque based on the throttle position signal; and
selecting the motor torque command signal based on the engine torque limit and the requested motor torque.

5. The method of claim 1, wherein determining the torque adjustment factor includes:
determining an absolute pressure of air at the intake manifold of the engine; and
determining an air/fuel ratio based on absolute pressure and the fuel signal.

6. The method of claim 1, wherein determining the torque capability includes:
determining a torque output at steady state of the engine based on the fuel signal and the engine speed signal; and
determining a desired acceleration margin associated with the engine; and
calculating the torque capability by reducing the torque output at steady state based on the desired acceleration margin.

7. A machine (100), comprising:
an internal combustion engine (120) configured to generate a torque output;
one or more traction devices (152, 152b);
an electric system (130), including:
a generator (204) coupled to the internal combustion engine via a shaft and configured to convert mechanical output power generated by the internal combustion engine into electric power;
at least one electric drive motor (212a, 212b) electrically coupled to the generator and configured to convert electric power generated by the generator to mechanical torque for driving the one or more traction devices associated with the machine;
a controller (140) communicatively coupled to the internal combustion engine, the generator, and the at least one electric drive motor, wherein the controller is configured to:
receive a fuel signal indicative of a volume of fuel provided to the internal combustion engine;
receive an engine speed signal indicative of a rotational speed of the shaft;
receive a boost pressure signal indicative of a pressure of air at an intake manifold of the internal combustion engine;
determine a torque adjustment factor based on the fuel signal and the boost pressure signal;
determine a torque capability of the internal combustion engine based on the fuel signal and the engine speed signal;
determine an engine torque limit based on the torque capability and the torque adjustment factor; and
determine a first motor torque command signal for the at least one electric drive motor based at least in part on the engine torque limit.

8. The machine of claim 7, wherein the controller is further configured to:
receive a throttle position signal indicative of a position of a throttle for controlling speed of the machine;
determine a requested motor torque based on the throttle position signal; and
select the first motor torque command signal based on the engine torque limit and the requested motor torque.

9. The machine of claim 7, wherein the controller is configured to determine the torque adjustment factor by:
determining an absolute pressure of air at the intake manifold of the internal combustion engine; and
determining an air/fuel ratio based on absolute pressure and the fuel signal.

10. The machine of claim 7, wherein the controller is configured to determine the torque capability by:
determining torque output at steady state of the internal combustion engine based on the fuel signal and the engine speed signal; and
determining a desired acceleration margin associated with the internal combustion engine; and
calculating the torque capability by reducing the torque output at steady state based on the desired acceleration margin.
